# EUROPEAN PATENT APPLICATION

(11) **EP 2 230 840 A2**
(43) Date of publication of application: **22.09.2010**
(21) Application number: 10154115.9
(22) Date of filing: 19.02.2010
(51) Int. Cl.: H04N 5/765

(54) **Apparatus to process signal of digital interface and method thereof**

(30) Priority: 16.03.2009 KR 20090022149
(71) Applicant: SAMSUNG ELECTRONICS CO., LTD., Suwon-si Gyeonggi-do 442-742 (KR)
(72) Inventor: Choi, Sung Hun, Incheon (KR)
(74) Representative: Grootscholten, Johannes A.M.

(57) **Abstract**

A device and method of processing signals of a digital interface include the digital interface (e.g., HDMI) transmitting digital A/V signals through one cable such that compatibility between devices is improved and no load is applied to A/V operations. In order to distinguish a physical disconnection of an HDMI cable, prevent the occurrence of system load caused by a complicated control method, and solve software (S/W) operation errors caused by entanglement of wires, a signal processing device effectively decides transient statuses of HOT-PLUG and RSEN signals by detecting a signal level of a CEC line, and reduces system load caused by comparing the action of HOT-PLUG and RSEN transient statuses to the detected signal levels of one or more CEC lines. Therefore, the signal processing device increases stability of A/V operations (e.g., a media playback function) unique to a system, and removes complex and time consuming operations while being controlled, thereby increasing HDMI compatibility.

## Description

### BACKGROUND

### 1. Field of the General Inventive Concept

Embodiments of the present general inventive concept relate to an apparatus and method of processing signals of a digital interface (e.g., a high definition multimedia interface (HDMI)) that transmits digital audio/video (A/V) signals through one cable, such that compatibility between devices is improved and no load is applied to A/V operations.

### 2. Description of the Related Art

Recently, digital versatile discs (DVDs) have been widely used as recording mediums for recording/reproducing high-quality audio and video signals. In addition, digital image displays (e.g., displays for digital satellite broadcasting) for displaying high-quality image data and high-definition digital TVs for more clearly displaying high-quality digital images of DVDs have rapidly come into widespread use.

Therefore, the demands of users who desire to connect a variety of DVD devices (e.g., DVD player and DVD recorder) that record or reproduce video data in/from DVDs to a TV are rapidly increasing. A digital visual interface (DVI) or a high definition multimedia interface (HDMI) has been used as a digital interface for transmitting data between such DVD devices.

Specifically, HDMI is a multimedia interface specification, which has been designed to transmit HD-grade uncompressed full-digital audio/video (A/V) signals through one cable, so as to directly connect a source device (e.g., a DVD player or a set top box (STB)) to a display (e.g., a monitor or a TV) or to interconnect the source device and the display through a repeater.

Displays, such as TVs, store VESA Extended Display Identification Data (EDID) information in an EEPROM. A source device, such as a DVD player, reads EDID information through a Display Data Channel (DDC) line (e.g., I²C communication line) of an HDMI cable, so as to decide audio and video (A/V) outputs having appropriate resolution according to categories of displays.

Generally, a TV serving as a static display has a fixed EDID. A repeater corrects and records EDID and is designed to perform a HOT-PLUG reset so as to allow the source device to re-read the EDID. A receiver sense input (RSEN) signal generated when a video channel is turned off may be used when there is a need to request a new HDMI connection.

As described above, the hot plug is used when a new HDMI connection is requested in the same manner as in the RSEN signal, but its unique purpose is to inform the source device of the update of EDID. Therefore, when a channel is severed (i.e., "RSEN = OFF") or a hot plug is low in level, an HDMI connection of the source device should also be severed. Then, when a current status again reaches a condition of the HDMI connection (i.e., "HOT PLUG = HIGH" and "RSEN = ON"), the source device reads EDID for HDMI reconnection, decides A/V outputs, and then attempts to authenticate high definition copy protection (HDCP).

However, when a TV serving as a display is powered off and is then powered on, statuses of "HOT-PLUG" and "RSEN" signals generally become complicated although the signal complication is not intended. For example, the reason why the "HOT-PLUG" and "RSEN" signals become complicated is that a variety of methods for controlling TV software (S/W) are present or a signal generated by a power-source relation of a system is present. The most serious problem of the above related art is that a user is unable to recognize whether or not an HDMI cable is actually disconnected, and is also unable to recognize the presence or absence of a control signal, resulting that the source device reads EDID whenever a turn-ON condition is provided, resulting in the occurrence of unnecessary load in the system.

### SUMMARY

The present general inventive concept provides an apparatus and method of processing signals of a digital interface, which detect a level of a Consumer Electronics Control (CEC) line so as to reduce system load caused by transient statuses of "HOT-PLUG" and "RSEN" signals, so that compatibility between HDMI drivers is improved and no load occurs in A/V operations.

Additional aspects of the present general inventive concept will be set forth in part in the description which follows and, in part, will be obvious from the description, or may be learned by practice of the general inventive concept.

Embodiments of the present general inventive concept may be achieved by providing a method of processing signals between devices interconnected via a digital interface cable for use in a digital interface includes acquiring extended display identification data (EDID) information through a display data channel (DDC) line when the digital interface cable is connected, detecting a level of a consumer electronics control (CEC) line, and determining whether the EDID information is updated according to the detected level of the CEC line.

The digital interface cable may be a high definition multimedia interface (HDMI) cable.

The devices may be a source device and a display, each of which may have an HDMI driver.

The detecting of the level of the CEC line may detect the level of the CEC line through input/output (I/O) ports of a central processing unit (CPU) having the HDMI driver.

The method may further include monitoring a status of a HOT-PLUG signal of the HDMI drivers. Determining whether the EDID information is updated may include, when the level of the CEC line has the same timing as that of the HOT-PLUG signal, determining that the HDMI cable is released and reconnected, and updating the EDID information.

Determining whether the EDID information is updated may include determining a transient status of the HOT-PLUG signal when the level of the CEC line does not have the same timing as that of the HOT-PLUG signal, and may not update the EDID information.

The method may further include, filtering, by a repeater transmitting signals between the HDMI drivers, a downstream HOT-PLUG transient status, and propagating the filtered result upstream.

Embodiments of the present general inventive concept may also be achieved by providing an apparatus to process signals between devices interconnected via a digital interface cable for use in a digital interface includes a storage unit to store extended display identification data (EDID) information acquired via a display data channel (DDC) line, and a controller to detect a level of a consumer electronics control (CEC) line, and determine whether the EDID information is updated according to the detected level of the CEC line.

The controller may detect the level of the CEC line through input/output (I/O) ports of a central processing unit (CPU) having the HDMI driver.

The controller may monitor a status of a HOT-PLUG signal of the HDMI driver, may determine that the HDMI cable is released and reconnected when the level of the CEC line has the same timing as that of the HOT-PLUG signal, and may update the EDID information.

The controller may monitor a status of a HOT-PLUG signal of the HDMI driver, may decide a transient status of the HOT-PLUG signal when the level of the CEC line does not have the same timing as that of the HOT-PLUG signal, and may not update the EDID information.

The apparatus may further include a repeater to transmit signals between HDMI drivers, and the controller may allow the repeater to filter a downstream HOT-PLUG transient status, and propagates the filtered result to an upstream.

Embodiments of the present general inventive concept may also be achieved by updating EDID storage information from a display device to a source device, including outputting a signal pattern representing transient statuses of HOT-PLUG and RSEN signals from the display device through an HDMI cable having a consumer electronics control (CEC) line, comparing a level of the CEC line at the source device to a timing of the HOT-PLUG signal, and determining whether to read EDID storage information from the display device based on the compared level of the CEC line to the timing of the HOT-PLUG signal.

Embodiments of the present general inventive concept may also be achieved by processing signals between devices interconnected via a digital interface cable for use in a digital interface including detecting a level of a consumer electronics control (CEC) line within the digital interface cable when a status of connection signals of a display device are abruptly changed, and comparing the level of the CEC line to a HOT-PLUG connection signal of a display device to determine a connection state of the HDMI cable between the display device and a source device.

The processing may also include determining whether to read EDID data from the display device after the comparison is made.

Embodiments of the present general inventive concept may also be achieved by providing determining a connection of a digital interface cable between a source device and a display device, including determining whether the digital interface cable having a consumer electronics cable (CEC) line therein is released and reconnected to the display device and whether a HOT-PLUG connection signal of the display device is in a signal transient status, and measuring a level of the CEC line and a timing of the HOT-PLUG connection signal, wherein when the level of the CEC line does not have the same timing as the HOT-PLUG signal, determining that the digital interface cable is not released and reconnected.

The method of may also include reading EDID data from the display device if the digital interface cable is determined to be released and reconnected.

The method may also include not reading EDID data from the display device if the display device is in a signal transient status.

Embodiments of the present general inventive concept may also be achieved by providing an apparatus to process signals between devices interconnected via a digital interface cable for use in a digital interface including a source device including a controller to read data from a display device transmitted across the digital interface cable having a consumer electronics control (CEC) line, wherein the controller detects the CEC line and determines the connection status of the digital interface cable to the display device based on a comparison between a level of the CEC line and the timing of a HOT-PLUG signal output from the display device.

The signal pattern may be an ON/OFF signal pattern.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:
FIG. 1 illustrates a system of a digital interface according to an exemplary embodiment of the present general inventive concept;
FIG. 2 is a block diagram illustrating signal processing operations of a digital interface according to an exemplary embodiment of the present general inventive concept;
FIG. 3 is a flow chart illustrating signal processing operations associated with transient statuses of HOT-PLUG and RSEN signals in a digital interface according to an exemplary embodiment of the present general inventive concept;
FIGS. 4A-4C include a timing diagram illustrating an example of processing transient statuses of HOT-PLUG and RSEN signals in a digital interface according to an exemplary embodiment of the present general inventive concept; and
FIG. 5 is a timing diagram illustrating an example to propagate transient statuses of HOT-PLUG and RSEN signals in a repeater according to an exemplary embodiment of the present general inventive concept.
FIG. 6 is a block diagram illustrating signal processing operations and connections of a digital interface according to an exemplary embodiment of the present general inventive concept.

### DETAILED DESCRIPTION OF THE EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

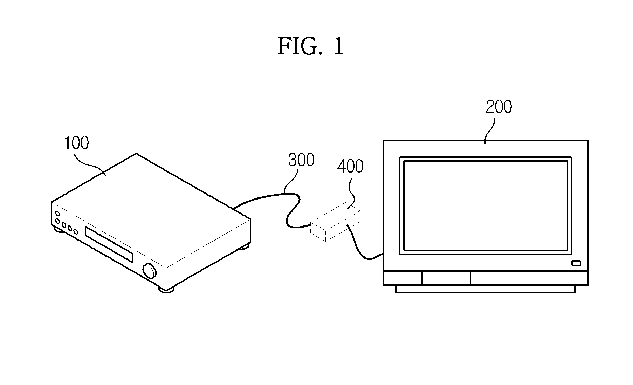

FIG. 1 illustrates a system of a digital interface according to an exemplary embodiment.

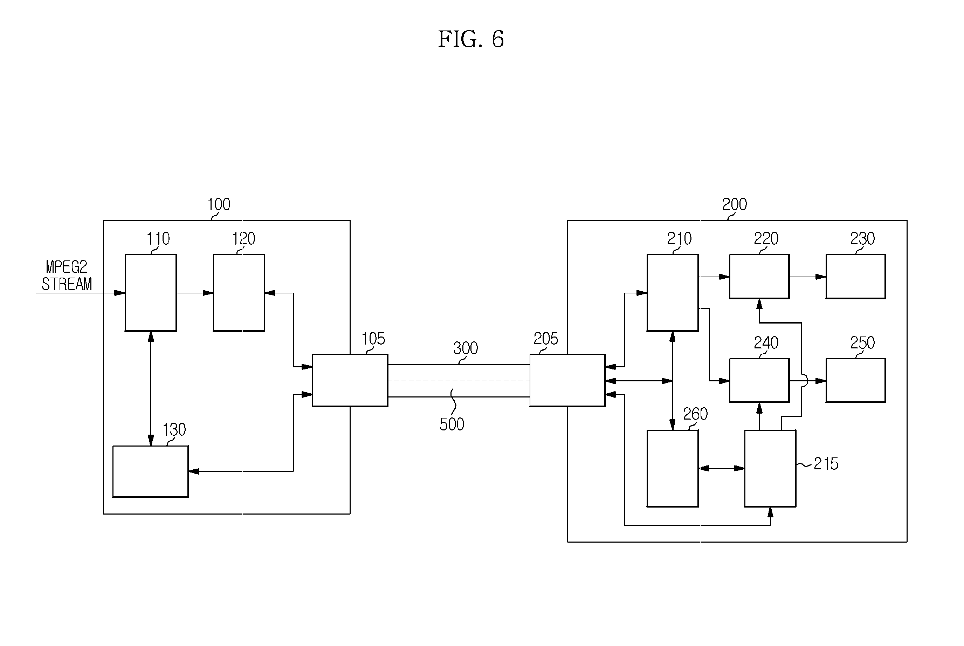

Referring to FIG. 1, a source device such as a DVD player 100 acting as one of a plurality of possible source devices has a High Definition Multimedia Interface (HDMI) output port, and a display device 200 such as a TV, computer monitor, screen or the like, acts as one of a plurality of possible displays. An HDMI, or digital interface cable 300 is connected between the DVD player 100 and the TV 200, such that audio and video (A/V) signals are communicated between the DVD player 100 and the TV 200 via the HDMI cable 300. The HDMI cable 300 may include a plurality of lines or channels (illustrated in FIG. 6) to transmit audio, video, control, data and other signals from the source device 100 to the display device 200.

The HDMI cable 300 is able to simultaneously transmit A/V signals, so that it may directly connect the DVD player 100 to the TV 200, or may connect the DVD player 100 to the TV 200 through a repeater 400. The HDMI cable may be of such a length wherein the signals being transmitted between the DVD player 100 and the TV 200 become attenuated, such that the repeater 400 may be used to boost the strength of signals in order to meet their destinations.

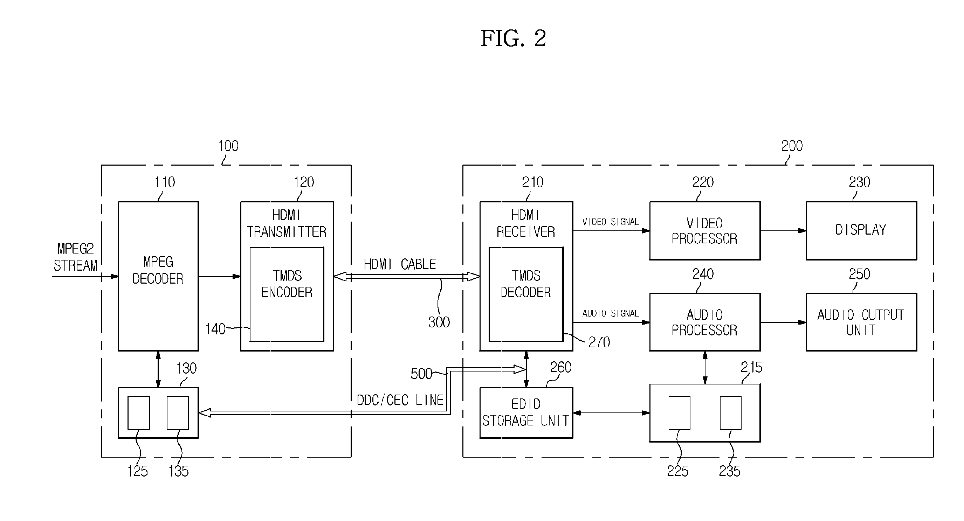

FIGS. 2 and 6 are block diagrams illustrating signal processing operations and connections of a digital interface according to an exemplary embodiment.

As illustrated in FIGS. 2 and 6, the DVD player 100 includes an MPEG decoder 110, an HDMI transmitter 120, and a controller 130. The DVD player 100 may also includes an input/output (I/O) port 105 to connect the HDMI cable 300 to the internal components of the DVD player 100. The controller may include an internal memory 135 to store programs and data to control the DVD player 100 and the transmittance of signals through the digital interface cable 300. The controller 130 may also include an HDMI driver 125 to drive signals through the HDMI cable 300 including signals transmitted over the DDC/CED line(s) 500 to the display device 200. The DDC/CED line 500 is an example of one of the signal lines or channels included within the HDMI cable 300. The TV 200 includes an input/output (I/O) port 205 to receive and transmit signals over the HDMI cable 300. The TV 200 also includes a controller 215 to control operations of the TV 200. The controller 215 may also include an HDMI driver 225 to drive signals of the TV 200 through the HDMI cable 300 and a memory 235 to store data and programs to control the display device 200 as well as the transfer of signals through the digital interface cable 300. The memory regions 135 and 235 may also be positioned external to the respective controller regions 130 and 215, within the source devices 100 and display devices 200.

As illustrated in FIG. 6, the HDMI cable 300 is connected between the I/O ports 105 and 205. The I/O ports 105 and 205 may be either of male or female variety, and include configuration for 15 pins, 19 pins, 25 pins, or other configurations as are known in the art for HDMI cables. The HDMI cables 300 may likewise have male or female connectors at the ends of each cable to attach to the I/O ports 105 and 205. The HDMI cable 300 may have a plurality of connectors that extend from the I/O port 105 to the HDMI transmitter 120, and a number of connectors that extend to the controller 130 that includes the DDC/CEC lines 500.

As illustrated in FIG. 2, the HDMI cable 300 and DDC/CEC line may be directly connected to the HDMI receiver 210 and EDID storage unit 260. Though illustrated as two separate lines in FIG. 2, the DDC/CEC line 500 is embodied within the HDMI cable 300 as illustrated in FIG. 6. When the HDMI cable 300 is connected through connectors to the ports 105 and 205, the ports may include dedicated wires to direct the DDC/CEC lines 500 directly to the controller 130 or to the interface between the HDMI receiver 210 and the EDID storage unit 260. The I/O ports 105 and 205 may also directly connect various lines or channels from the HDMI connector 300 to other components within source devices 100 and/or display devices 200.

The MPEG decoder 110 receives MPEG-2 streams from either a DVD or other disc loaded into the DVD player 100, or a broadcast signal (e.g., STB signal), and decompresses the MPEG-2 streams, such that the MPEG decoder 110 decodes the MPEG-2 streams into digital audio and video (A/V) data.

The HDMI transmitter 120 receives the digital A/V data decoded by the MPEG decoder 110, and transmits the received A/V data as an optimum signal appropriate for a digital interface to be connected between the I/O ports 105 and 205. The HDMI transmitter 120 includes a Transition-Minimized Differential Signaling (TMDS) encoder 140. The TMDS encoder 140 performs TMDS-encoding on the decoded data of the MPEG decoder 110, such that the decoded data is converted into another format transmittable by an HDMI digital interface. Accordingly, the resultant data having the TDMS format may be transmitted to the digital TV 200 through the HDMI cable 300.

When the DVD player 100 and the TV 200 are interconnected via the HDMI cable 300 via the I/O ports 105 and 205, the controller 130 of the DVD player 100 may be used as a CPU, which reads Extended Display Identification Data (EDID) information from an EDID storage unit 260 of the TV 200to recognize the TV 200 through Display Data Channel / Consumer Electronics Control (DDC/CEC) lines 500. Either or both of the HDMI cables 300 or the DDC/CEC lines 500 may include signal lines to indicate HOT-PLUG and RSEN statuses. HOT-PLUG may represent a signal that includes information to indicate that the HDMI cable 300 is connected or not connected from the source devices such as a DVD 100 to the display, or sink devices such as the TV 200.

As illustrated in FIGS. 2 and 6, when the HDMI cable 300 is connected from the I/O port 105 of the DVD to the I/O port 205 of the TV, the controller 215 generates a "HIGH" HOT-PLUG signal to be transmitted from the driver 225 of the controller 215 via the DDC/CEC line 500 to the controller 130 of the DVD 100. A receiver sense input (RSEN) bit may indicate if the TV or display device 200 is connected to the HDMI cable 300 and a HOT-PLUG bit may reflect the current state of the HOT-PLUG pin connected to the TV 200 via the HDMI connector.

When the HDMI cable 300 and/or DDC cables 500 are repeatedly released and reconnected, the HOT-PLUG and RSEN connection signals may be considered to have transient statuses. In more detail, in order to reduce system load caused by the transient statuses of HOT-PLUG and RSEN signals (hereinafter referred to as HOT-PLUG and RSEN transient statuses), when HOT-PLUG and RSEN signals are abruptly changed in status, the controller 130 can detect a level of the CEC line 500 at Input/Output (I/O) ports 105 and 205 without following a signal pattern of the HOT-PLUG or RSEN signals, such that the controller 130 can determine whether the HDMI cable 300 is in either a physical release status or whether the HOT-PLUG and RSEN signals have transient statuses. If there is no connection of the HDMI cable 300, the controller 130 omits an operation to read EDID information using conventional EDID information (i.e., pre-read EDID information) without any change, such that it prevents the occurrence of system load caused by complicated control methods and solves software (S/W) operation errors caused by entanglement of wires.

If the controller 130 determines that the HOT-PLUG and RSEN signals have transient statuses, which can indicate that the HDMI cable 300 is still connected between the DVD player 100 and the display device 200, the controller 130 may omit the operation to update EDID information as the originally read EDID information may be stored in the memory 135 of the source unit 100. Since there may be no need to read EDID information in the condition of transient status determination, the system load of the HDMI cable 300 is reduced.

The TV or display 200 connected to the DVD player 100 includes the HDMI receiver 210 connected via the I/O ports 105 and 205 to the HDMI transmitter 120, a video processor 220, a display 230, an audio processor 240, an audio output unit 250, an EDID storage unit 260 and a controller 215 to control the different components of the TV or display 200.

The HDMI receiver 210 receives digital A/V signals from the HDMI transmitter 120 of the DVD player 100. The HDMI receiver 210 includes a TMDS decoder 270. The TMDS decoder 270 performs TMDS-decoding on the HDMI signal which has been converted into another format transmittable by the HDMI digital interface. The HDMI interface may include the HDMI drivers 125 and 225 of the respective controllers 130 and 215, the I/O ports 105 and 205, and the HDMI cable 300.

The video processor 220 performs processing on digital video signals received from the HDMI receiver 210, and outputs the processed video signals to the display 230. The audio processor 240 performs processing on digital audio signals received from the HDMI receiver 210, and outputs the processed audio signals to the audio output unit 250.

The EDID storage unit 260 is used as an EEPROM to store EDID data. In more detail, the EDID storage unit 260 is indicative of a data format prescribed in Video Electronics Standards Association (VESA), namely, a display of characteristic data called extended display identification data (EDID). Various information may be included in this data format, for example, information of a manufacturer or standard, basic display variables (e.g., supportable resolution and color format), phosphor or filter type, timings supported by the display, display size, and characteristic information such as luminance data and pixel mapping data (for digital displays). The EDID may be stored in an internal EEPROM of the TV 200.

Operations and effects of the above-mentioned signal processing device for a digital interface and a method thereof will hereinafter be described in detail.

When the source device such as the DVD player 100 is connected to the display such as the TV 200, the source device and the display may be interconnected through the HDMI cable 300, or may be interconnected through the repeater 400, such that they reduce system load caused by HOT-PLUG and RSEN transient statuses in the digital interface capable of transmitting digital A/V signals through one cable. System load is reduced in the present general inventive concept because the controller 130 may be configured not to read the EDID from the display 200 caused by HOT-PLUG and RSEN transient statuses.

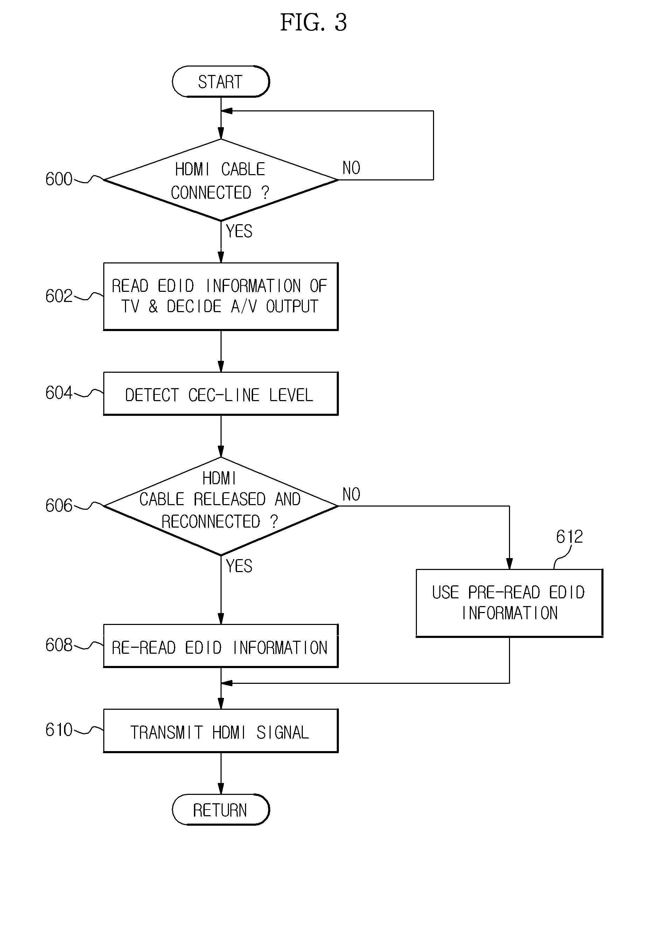

FIG. 3 is a flow chart illustrating signal processing operations associated with HOT-PLUG and RSEN transient statuses in the digital interface according to an exemplary embodiment of the present general inventive concept.

Referring to FIG. 3, at operation 600, when the DVD player 100 and the TV 200 are powered on, it is determined whether the DVD player 100 and the TV 200 are interconnected through the HDMI cable 300.

In order to determine whether the HDMI cable 300 is connected between the DVD player 100 and the TV 200, the controller 130 of the DVD player 100 determines whether the HOT-PLUG signal of an HDMI-prescribed digital interface is high in level. The HOT-PLUG signal may be transmitted along a dedicated line within the HDMI cable 300 that corresponds to pins in the I/O ports 105 and 205 connecting the controller 130 of the source DVD 100 to the TV 200.

If the DVD player 100 and the TV 200 are connected at the I/O ports 105 and 205 to the HDMI cable 300, the HOT-PLUG signal at the controller 130 of the source DVD 100 becomes high in level (i.e., 5V). Otherwise, if the DVD player 100 and the TV 200 are not connected to the HDMI cable 300, the HOT-PLUG signal at the controller 130 becomes low in level (i.e., 0V). Accordingly, the above operation to decide whether the HOT-PLUG signal is high or low in level is needed.

If the HOT-PLUG signal is high in level, the controller 130 reads EDID information of the TV 200 from the EDID storage unit 260 through the DDC line 500 when the HDMI cable 300 is connected between the DVD player 100 and the TV 200, and the controller 130 decides to output A/V signals at operation 602 from the DVD player 100 to the TV 200.

Additionally, the RSEN signal generated by either or both the TDMS decoder 270 in the receiver 210 or the controller 215 when a video channel is turned off may be used to signal a transient status and to newly request the HDMI connection.

In this way, if the TV 200 is powered off and then powered on after the HDMI cable 300 is connected to the DVD player 100 and the TV 200, an interrupt event (INT) occurs, such that HOT-PLUG(H) and RSEN (R) signal statuses become complicated as illustrated in FIG. A. These complicated HOT-PLUG(H) and RSEN (R) signals may also appear due to a variety of internal TV software control methods, a number of other devices connected to the TV, or may also appear due to a power source of a system structure. Specifically, this causes problems including a user being unable to recognize whether the above complicated H and R signals are caused by either a release of the HDMI cable 300, the turning on and off of the TV 200 or the presence of any number of control signals.

Therefore, the controller 130 of the DVD player 100 used as the source device reads EDID information whenever a Turn-ON condition is provided, such that the read EDID information is used as a system load. According to a prescribed specification, EDID information has been defined up to 255 blocks (where one block is equal to 128 bytes), and may correspond to a maximum of 4 blocks among 255 blocks under a general situation. When 4 blocks or 512 bytes are read through an I²C bus of about 56kbps, a time of about 300ms is consumed to read the 512 bytes although the 512 bytes are read under a sequential mode, and a longer time may also be used according to support or non-support status information indicating whether or not a chip supports the I²C mode. Differently from the display such as the TV 200, if the DVD player 100 is connected to the repeater 400, EDID status may be changed, such that the controller 130 reads such EDID whenever a current condition reaches the Turn-ON condition.

As a result, differently from an originally-intended HOT-PLUG function, respective products have different control schemes, such that it is impossible to predict a signal pattern. Also, the DVD player 100 used as the source device is dependent on HOT-PLUG and RSEN signals controlled or output by either the TV 200 or the repeater 400. After passing a predetermined period in which the HOT-PLUG signal is "LOW" and the RSEN signal is "OFF", in previously designed configurations if there arises a specific status where the HOT-PLUG signal is "HIGH" and the RSEN signal is "ON", the user is unable to determine whether the HDMI cable 300 is physically released and then re-connected or whether the status is caused by a software (S/W) control pattern. Accordingly, the DVD player 100 used as the source device may read EDID from the EDID storage unit 260 whenever the Turn-ON condition is provided. If a load of about 300ms frequently occurs, this load may often be used as a load of an apparatus to reproduce A/V signals instead of reading EDID, and a predetermined time during which EDID is read within a period having "HOT-PLUG = HIGH" may not be guaranteed. In this way, in a case of using a signal pattern having an excessive number of transient statuses, the HOT-PLUG signal may unexpectedly drop down to "LOW" even if the controller 130 reads EDID, such that it is difficult to have compatibility between HDMI drivers of various devices, resulting in greater inconvenience of use.

Therefore, the embodiment of the present general inventive concept discriminates between physical connection and disconnection of the HDMI cable 300, prevents the occurrence of system load caused by a complicated control method, and solves software (S/W) operation errors caused by entanglement of wires, so as to improve compatibility between HDMI drivers of various devices. In addition, in order to prevent a load from being applied to A/V general operations, the embodiment of the present general inventive concept performs signal processing on HOT-PLUG and RSEN transient statuses by detecting a level of the CEC line 500.

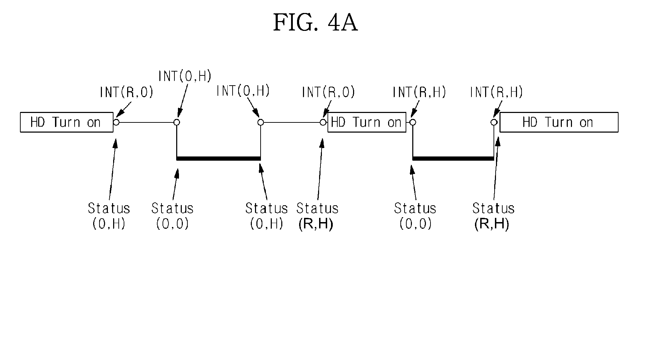

FIGS. 4A-4C are timing diagrams illustrating an example of processing transient statuses of HOT-PLUG and RSEN signals in a digital interface according to an exemplary embodiment.

In FIGS. 3 and 4A-4C, based on EDID information (DDC CLK "1") which is read when the TV 200 is initially powered on (HD Turn on) and the HDMI cable 300 is connected, if HOT-PLUG (H) and RSEN (R) signals are abruptly changed by user operations (e.g., ON/OFF operations of TV 200), the controller 130 detects the level of the CEC line 500 without following the ON/OFF signal pattern of HOT-PLUG and RSEN at operation 604, and determines whether the HDMI cable 300 is actually disconnected or whether a current status is a signal transient status at operation 606.

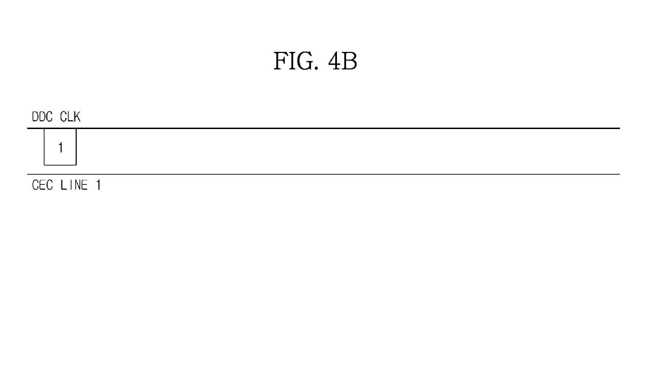

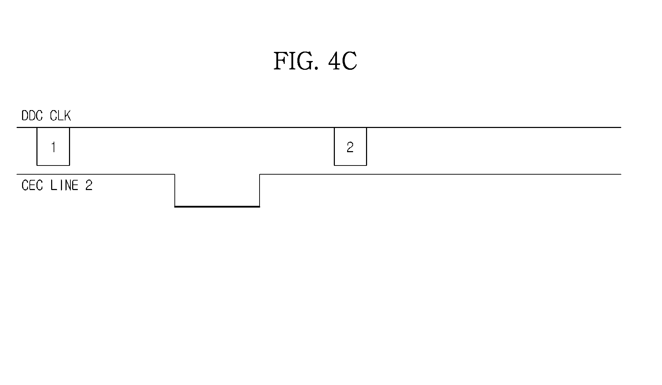

As illustrated in the CEC line 2 of FIG. 4C, if the level of the CEC line 2 has the same timing during the DDC CLK 1 as that of the HOT-PLUG (H) signal, the controller 130 determines that the HDMI cable is actually released and then re-connected. Otherwise, if the level of the CEC line 1 does not have the same timing as that of the HOT-PLUG (H) signal as illustrated in FIG. 4B, the controller 130 determines the HOT-PLUG and RSEN signals to be transient statuses in that the HDMI cable 300 is not released and re-connected and EDID information is not re-read.

If the presence of the release and reconnection of the HDMI cable 300 is decided as illustrated in the CEC line 2 of FIG. C, the controller 130 re-reads EDID information (See DDC CLK "2") after the release and reconnection of the HDMI cable 300, another time after the first read EDID information. The first read EDID information corresponding to the DDC CLK "2" may thus be overlapped such that it may herein be omitted at operation 608.

Therefore, the controller 130 decides the A/V output according to the updated re-read EDID information, and allows the HDMI signal to be communicated between the DVD player 100 and the TV 200 at operation 610.

In the meantime, if the HOT-PLUG and RSEN transient statuses illustrated in the CEC line 1 of FIG. 4B are decided "NO" at operation 606, the HDMI cable 300 is determined not to be disconnected and reconnected, and the controller 130 uses conventional EDID information (i.e., pre-read EDID information) without any change, such that it may omit the operation to read EDID information in operation 612.

Thereafter, the operation of FIG. 3 proceeds to operation 610, such that the HDMI signal may be communicated between the DVD player 100 and the TV 200 through the A/V output port decided by the pre-read EDID information.

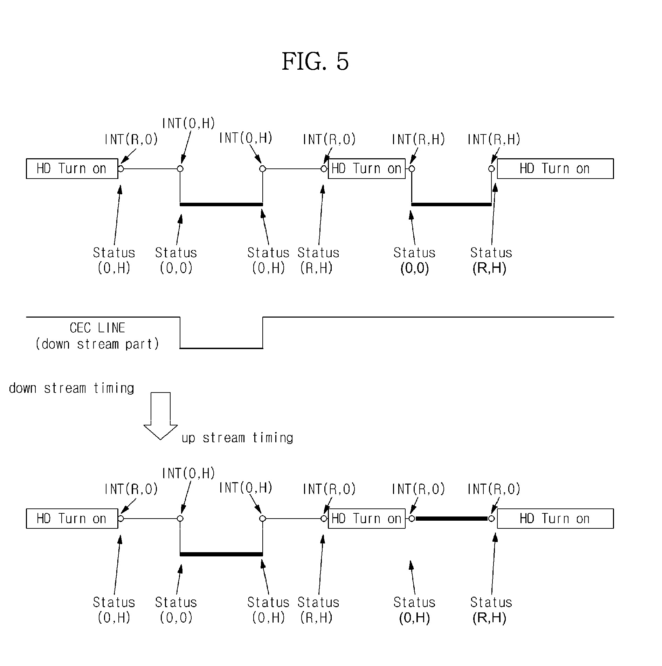

FIG. 5 is a timing diagram illustrating an example to propagate transient statuses of HOT-PLUG and RSEN signals in a repeater according to an exemplary embodiment.

In FIGS. 1, 2 and 5, when the DVD player 100 is connected to the repeater 400 instead of the TV 200, the controller 130 needs to re-read EDID even if no release and no reconnection occur between the HDMI cable 300 and the DVD player 100, because of the release and reconnection that may occur between the TV 200 and the repeater 400. If the DVD player 100 used as the source device is connected to the repeater 400, downstream and upstream CEC lines 500 of the repeater 400 are independent of each other, such that it is impossible to recognize a physical connection status between the repeater 400 and the TV 200. Also, since EDID is changed to another EDID, the repeater 400 analyzes the originally-intended HOT-PLUG operation and needs to newly read EDID. Accordingly, if the DVD player 100 is connected to the repeater 400 on the basis of a BCAPS address prescribed in the HDCP specification, the controller 130 receives signals from the repeater 400 without any change. Otherwise, if the DVD player 100 is connected to the TV 200 on the basis of the above BCAPS address, the controller 130 determines the presence or absence of physical release and reconnection on the basis of the CEC line 500.

However, if the above method is applied to the connection between the repeater 400 and the TV 200 (i.e., a downstream of the repeater 400), such transient status is not propagated to the DVD player 100 acting as the source device. According to the conventional method prescribed in the related art, the transient status of the TV 200 is propagated to the DVD player 100 used as the source device without any change. In contrast, the above embodiment of the present general inventive concept performs filtering on such transient status by referring to the CEC line 500, such that a meaningless HOT-PLUG signal is converted into an RSEN control signal in the direction of the DVD player 100, only reconnection such as HDCP except for EDID is derived so that no load is applied to the DVD player 100. As described above, the HOT-PLUG control signal is converted into the RSEN control signal, such that this embodiment is also available for products of the repeater 400. For example, since the release and reconnection of the HDMI cable 300 occur from the downstream (i.e., a first HOT-PLUG reset occurs from the downstream, the upstream needs to generate the HOT-PLUG reset event (INT) in order to allow the controller 130 to read EDID and propagate it to the DVD player 100. However, in the case where a second HOT-PLUG reset occurs, there is no need to propagate EDID, but operations (e.g., HDCP authentication) required for reconnection should be derived, such that the embodiment of the present general inventive concept proposes a method to convert the HOT-PLUG signal into the RSEN event and then propagating the RSEN event.

Finally, the embodiment of the present general inventive concept may also recognize whether EDID is changed to another EDID by checking check-sum data. But, according to this check-sum method, when the connection of the TV 200 is changed, the same check-sum data may be unexpectedly recorded by chance, such that the above check-sum method has difficulty in representing EDID. As a result, in order to guarantee reliability, the above embodiment of the present general inventive concept proposes a method of using the CEC line 500.

As is apparent from the above description, in order to make a distinction between physical release and reconnection of an HDMI cable, prevent the occurrence of system load caused by a complicated control method, and solve software (S/W) operation errors caused by entanglement of wires, the signal processing device for the digital interface according to the above exemplary embodiments effectively decides transient statuses of HOT-PLUG and RSEN signals by detecting a level of a CEC line, and reduces system load caused by the following action of HOT-PLUG and RSEN transient statuses. Therefore, the signal processing device increases stability of A/V operations (e.g., a media playback function) unique to a system, and removes complex and time consuming operations while being controlled, thereby increasing HDMI compatibility.

Although a few embodiments of the present general inventive concept have been illustrated and described, it would be appreciated by those skilled in the art that changes may be made in these embodiments without departing from the principles and spirit of the general inventive concept, the scope of which is defined in the claims and their equivalents.

## Claims

1. A method of processing signals between devices interconnected via a digital interface cable for use in a digital interface comprising:
acquiring extended display identification data (EDID) information through a display data channel (DDC) line when the digital interface cable is connected;
detecting a level of a consumer electronics control (CEC) line; and
determining whether the EDID information is updated according to the detected level of the CEC line.

2. The method according to claim 1, wherein the digital interface cable is a high definition multimedia interface (HDMI) cable.

3. The method according to claim 2, wherein the devices are a source device and a display, each of which has an HDMI driver.

4. The method according to claim 3, wherein the detecting of the level of the CEC line detects the level of the CEC line through input/output (I/O) ports of a central processing unit (CPU) having the HDMI driver.

5. The method according to claim 3, further comprising:
monitoring a status of a HOT-PLUG signal of the HDMI drivers, and
the determining of whether the EDID information is updated includes:
when the level of the CEC line has the same timing as that of the HOT-PLUG signal, determining that the HDMI cable is released and reconnected, and updating the EDID information.

6. The method according to claim 5, wherein the determining of whether the EDID information is updated includes determining a transient status of the HOT-PLUG signal when the level of the CEC line does not have the same timing as that of the HOT-PLUG signal, and not updating the EDID information.

7. The method according to claim 3, further comprising:
filtering, by a repeater transmitting signals between the HDMI drivers, a downstream HOT-PLUG transient status, and propagating the filtered result to an upstream.

8. An apparatus to process signals between devices interconnected via a digital interface cable for use in a digital interface comprising:
a storage unit to store extended display identification data (EDID) information acquired via a display data channel (DDC) line; and
a controller to detect a level of a consumer electronics control (CEC) line, and determine whether the EDID information is updated according to the detected level of the CEC line.

9. The apparatus according to claim 8, wherein the devices are a source device and a display, each of which has an HDMI driver.

10. The apparatus according to claim 9, wherein the controller detects the level of the CEC line through input/output (I/O) ports of a central processing unit (CPU) having the HDMI driver.

11. The apparatus according to claim 9, wherein the controller monitors a status of a HOT-PLUG signal of the HDMI driver, determines that the HDMI cable is released and reconnected when the level of the CEC line has the same timing as that of the HOT-PLUG signal, and then updates the EDID information.

12. The apparatus according to claim 9, wherein the controller monitors a status of a HOT-PLUG signal of the HDMI driver, decides a transient status of the HOT-PLUG signal when the level of the CEC line does not have the same timing as that of the HOT-PLUG signal, and does not update the EDID information.

13. The apparatus according to claim 9, further comprising:
a repeater to transmit signals between HDMI drivers,
and
the controller allows the repeater to filter a downstream HOT-PLUG transient status, and propagates the filtered result to an upstream.
